# EUROPEAN PATENT APPLICATION

(11) **EP 2 688 293 A2**
(43) Date of publication of application: **22.01.2014**
(21) Application number: 13170805.9
(22) Date of filing: 06.06.2013
(51) Int. Cl.: H04N 5/445

(54) **Method and apparatus for displaying an image, and computer readable recording medium**

(30) Priority: 19.07.2012 KR 20120078856
(71) Applicant: Samsung Electronics Co., Ltd, Gyeonggi-do 443-742 (KR)
(72) Inventor: SO, Yong-jin, Seoul (KR); KO, Chang-seog, Gyeonggi-do (KR)
(74) Representative: Taor, Simon Edward William

(57) **Abstract**

A method and apparatus for displaying an image and a computer readable recording medium are provided. The image display apparatus includes: an On Screen Display (OSD) information processor which generates and outputs menu information comprising an OSD menu necessary for setting an operation of the image display apparatus and, in response to help information relating to a selection menu selected from the OSD menu being requested, generates and outputs the menu information and the help information; a scaler which, in response to the help information being requested, scales the menu information and the help information provided from the OSD information processor and separately provides the scaled menu information and help information; and a display which receives the scaled menu information and help information from the scaler and respectively displays the menu information and the help information in first and second regions so that the menu information and the help information do not overlap with each other.

## Description

The inventive concept generally relates to a method and apparatus for displaying an image, and a computer readable recording medium. In particular, the inventive concept relates to displaying a help screen menu or a manual in order to allow a user to directly control an On Screen Display (OSD) menu, while seeing the help or the manual on the image display apparatus, and a computer readable recording medium.

In general, an apparatus for displaying an image provides help information or a manual according to a user demand in order to help the user easily control the apparatus for displaying an image. In general, the help information or the manual is provided on a full screen of the apparatus for displaying an image or may overlap with a control screen.

As described above, help information or covers a screen which is to be controlled or is provided on a screen which is controlled. As a result, it is difficult to perform a control operation by using the help information. For example, a user closes the help information or the manual in order to move onto a corresponding screen, or covers the manual and then opens a control screen in order to read the help information and then returns to the corresponding screen. Although the user is well informed of the contents of the manual or help information, a malfunction may occur during a control operation. Also, when the user controls an OSD menu, the user checks the manual or the help menu.

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide a method and apparatus for displaying an image which provides a menu along with a screen to be controlled, in order to allow a user to directly use an On Screen Display (OSD) menu or function while viewing the contents of the manual or help information, and a computer readable recording medium. According to the exemplary embodiments, there is provided an apparatus for displaying an image including: an On Screen Display (OSD) information processor which generates and outputs menu information comprising an OSD menu which is necessary for setting an operation of the image display apparatus; and, in response to help information relating to a selection menu selected from the OSD menu being requested, generates and outputs the menu information and the help information; a scaler which, in response help information being requested, scales the menu information and the help information provided from the OSD information processor and separately provides the scaled menu information and the help information; and a display which receives the scaled menu information and help information from the scaler and respectively displays the menu information and the help information in first and second regions so that the menu information and the help information do not overlap with each other.

The scaler may include: a first scaler which scales the menu information and provides the scaled menu information to the first region; and a second scaler which scales the help information and provides the scaled help information to the second region.

The image display apparatus may further include a controller which controls the OSD information processor to highlight the selected selection menu or the help information on the display.

The controller may control the OSD information processor to enlarge and display the selection menu on the display.

The OSD information processor may additionally generate an auxiliary button which helps in moving the highlighted menu which had been selected, and may include and output the auxiliary button within the selection menu or within a region of the help information.

According to another aspect of the exemplary embodiments, a method of displaying an image is provided including: generating and outputting menu information including an OSD menu necessary for setting an operation of the apparatus for displaying an image and, in response to help information relating to a selection menu selected from the OSD menu being requested, generating and outputting the menu information and the help information; wherein in response to the help information being requested, scaling the menu information and the help information and separately providing the scaled menu information and help information; and receiving the scaled menu information and the help information and respectively displaying the menu information and the help information in first and second regions of a display so that the menu information and the help information do not overlap with each other.

Separately providing the scaled menu information and the help information may include: scaling the menu information and providing the scaled menu information into the first region; and scaling the help information and providing the scaled help information into the second region.

The image display method may further include: controlling an OSD information processor to highlight on the display the selection menu or the help information which have been selected.

The image display method may further include: controlling the OSD information processor to enlarge the display of the selection menu on the display.

The generating and outputting of the menu information and the help information may include: additionally generating an auxiliary button which helps in moving the highlighted information, and including and outputting the auxiliary button in the selection menu or in a region of the help information.

An exemplary embodiment may include an apparatus for displaying an image, the apparatus including: an On Screen Display (OSD) information processor which generates and outputs menu information including an OSD menu and, in response to help information being requested, generates and outputs the menu information and the help information; a scaler which, in response to help information being requested, scales and provides the menu information and the help information; and a display which receives the scaled menu information and help information from the scaler and displays the menu information and the help information in non-overlapping first and second regions. The scaler may include: a first scaler which scales the menu information and provides the scaled menu information into the first region; and a second scaler which scales the help information and provides the scaled help information into the second region. An exemplary embodiment may further include a controller which controls the OSD information processor in order to highlight the displayed selection menu or the help information. The controller causes the OSD information processor to enlarge the display of the selection menu. In addition, the OSD information processor may generates an auxiliary button for moving the highlight. The highlight may also be moved by a direction key.

An exemplary embodiment may further include a method of displaying an image, the method including: outputting menu information including an OSD menu and, in response to a request for help information, outputting the menu information and help information; scaling the menu information and the help information and separately displaying the scaled menu information and help information; and displaying the menu information and the help information in non-overlapping first and second regions of the display.

According to another aspect of the exemplary embodiments, there is provided a computer readable recording medium storing a program, which when executed by a processor of a computer, causes the computer to execute the method of displaying an image.

The above and/or other aspects will be more apparent by describing certain exemplary embodiments with reference to the accompanying drawings, in which:
FIG. 1 is a view which illustrates a structure of an information processing system for an On Screen Display (OSD), according to an exemplary embodiment of the inventive concept;
FIG. 2 is a block diagram which illustrates a structure of an apparatus for displaying an image according to an exemplary embodiment of the inventive concept;
FIG. 3 is a block diagram which illustrates a structure of an apparatus for displaying an image, according to another exemplary embodiment of the inventive concept;
FIGS. 4A through 4D are views which illustrate a help information screen displayed according to a user request for help and an OSD control operation which is performed when the help information screen is displayed;
FIGS 5A and 5B are views which illustrate a movement of a highlighted area between an OSD screen and a help information screen;
FIGS. 6A and 6B are views which illustrate moving a highlight using a particular button;
FIGS. 7A through 7D are views which illustrate moving a highlight by using a direction key and a graphical user interface (GUI) button;
FIGS. 8A and 8B are views which illustrate a controllable OSD menu which is enlarged;
FIGS. 9A and 9B are views which illustrate an initial OSD menu which is displayed on a full screen; and
FIG. 10 is a flowchart which illustrates a method of displaying an image according to an exemplary embodiment of the inventive concept.

Exemplary embodiments are described in greater detail with reference to the accompanying drawings.

In the following description, the same drawing reference numerals are used for the same elements, even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

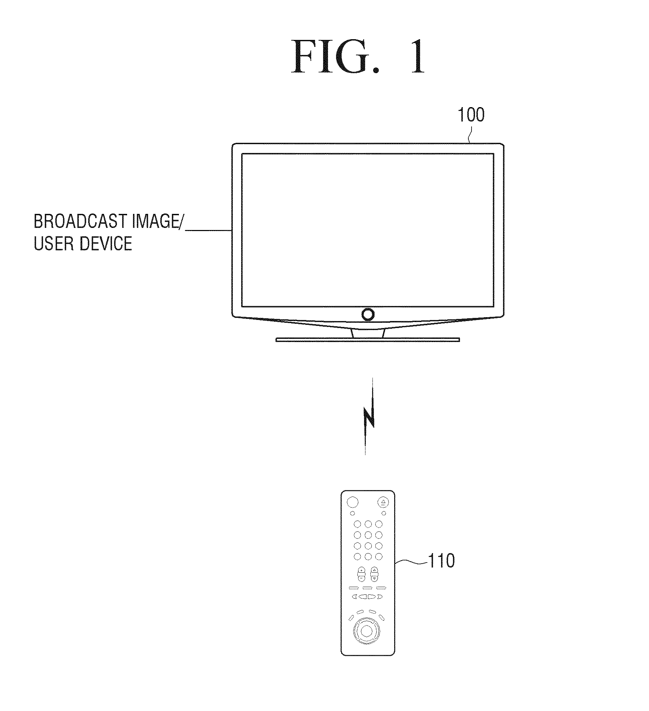

FIG. 1 is a view which illustrates a structure of an information processing system for an On Screen Display (OSD) according to an exemplary embodiment of the inventive concept.

Referring to FIG. 1, the information processing system for an OSD includes an image display apparatus 100 and a a remote control 110. However, the apparatus 100 for displaying an image can process OSD information either through the control of a button provided on a lower part of a screen or by the control of a button displayed on a touch screen without operating the remote control 110. The whole of the remote control 110 will be included herein in order to help provide a sufficient understanding of the inventive concept.

The apparatus 100 for displaying an image, according to an exemplary embodiment receives a broadcast image from an external source or from a user device, such as a video tape recorder (VTR) or a game machine connected by a user, and displays the image on the screen. In this process, the apparatus 100 for displaying an image may operate in conjunction with an image relaying apparatus such as a set-top box.

The image display apparatus 100 may be a touch screen type of apparatus for displaying an image, a self-light emitting display apparatus such as an organic light-emitting diode (OLED), or a light-receiving display apparatus such as a liquid crystal display (LCD). The apparatus 100 for displaying an image may be implemented as display apparatus such as a computer instead of as a TV. Here, the light-receiving display apparatus refers to a display apparatus which includes an additional backlight unit (BLU) providing light. The additional BLU may include an LED, etc.

The image display apparatus 100 according to the exemplary embodiment may display an OSD menu which sets an operation of the display apparatus 100 on the screen, according to a user request. For this purpose, the apparatus 100 for displaying an image may have a menu button (or an exclusive button or a GUI button) for requesting the OSD menu in an additional region of the screen. In response to the image display apparatus 100 being a touch screen type image display apparatus, the apparatus 100 for displaying an image may use a button displayed on the screen and may display a corresponding menu screen by using a control signal received when the apparatus 100 for displaying an image operates along with the remote control apparatus 100, as shown in FIG. 1.

For example, in response to the apparatus 100 for displaying an image receiving a signal for requesting the OSD menu from the remote control 110, the image display apparatus 100 may utilize an algorithm according to a corresponding command in order to generate the OSD menu and may display the OSD menu on the screen. In response to the user requesting the help of a particular menu on the OSD menu, the apparatus 100 for displaying an image displays the help information of the corresponding menu on the screen so that the help information does not overlap with the OSD menu. To accomplish this, the apparatus 100 for displaying an image performs a scaling process to separate the OSD menu and the help information from each other on the screen. The scaling process refers to a process of re-arranging 16-bit data as 10-bit data and includes an overall operation of separating the OSD menu and the help information from each other on the screen. Here, the help information may include help or a manual. The manual is to easily explain a process required for operating and controlling a computer, etc. Therefore, the help information may be used to further provide information in addition to the information provided by the manual.

The remote control 110 may include a menu button which transmits a user request in order to display the OSD menu and the help menu or the OSD menu along with the manual, on the screen of the apparatus 100 for displaying an image. Here, the menu button may be variously referred to as an exclusive button or a GUI button. The menu button may be a button which sets an operation or a function of the apparatus 100 for displaying an image according to an exemplary embodiment of the inventive concept. For example, in response to the user pressing the menu button, the apparatus 100 which displays an image generates the OSD menu according to a signal received from the remote control 110 and outputs the OSD menu onto the screen. In response to a the user controlling a direction button to request the help information of a particular menu on the OSD menu, the apparatus 100 for displaying an image displays the OSD menu and the help information on the screen so that the OSD menu and the help information do not overlap with each other, according to a user command input to the remote control 110. The apparatus 100 for displaying an image may display the OSD menu and the manual so that the OSD menu and the manual do not overlap with each other.

According to the above-described structure, the user may control a particular menu on an OSD menu while viewing help information or a manual. As a result, the convenience to the user may be increased.

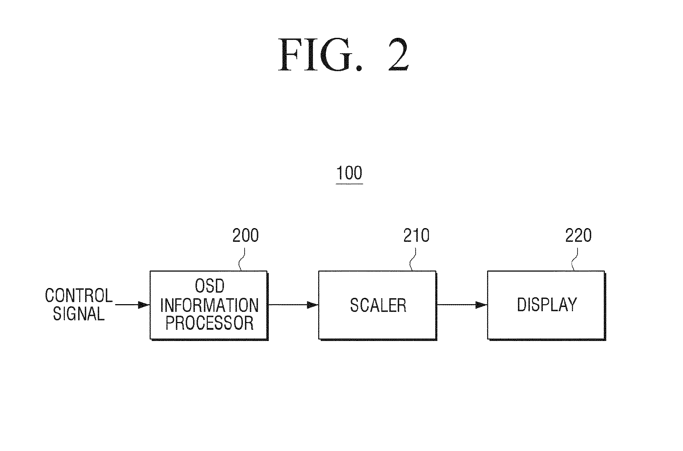

FIG. 2 is a block diagram which illustrates a structure of the image display apparatus 100 according to an exemplary embodiment of the inventive concept.

Referring to FIGS. 1 and 2, the image display apparatus 100 according to the inventive concept includes an OSD information processor 200, a scaler 210, and a part or a whole of a display 220. The apparatus 100 for displaying an image may further include a controller (not shown). The inclusion of the part or whole of the display 220 indicates that the OSD information processor 200 is integrated with the scaler 210 or the scaler 210 is configured as a part of the display 220. The whole of the display 220 will be described herein in order to help sufficient understanding of the inventive concept.

The OSD information processor 200 according to the exemplary embodiment utilizes an algorithm which generates an OSD menu and, when the user requests setting of an operation or a function of the apparatus 100 for displaying an image, the processor 200 implements the algorithm according to the corresponding request in order to generate and output the OSD menu. Here, information which corresponds to the OSD menu will be described in more detail, below, and may include information related to adjustments of brightness, a sound, a network, backlight, etc. of the apparatus 100 which displays an image. In response to the user requesting help or a manual of a particular menu on the OSD menu, the OSD information processor 200 generates and outputs the corresponding information along with the OSD menu. Here, the OSD information processor 200 may separately provide the OSD menu and information relating to the help information or the manual. Therefore, the OSD information processor 200, according to the exemplary embodiment, may include an information divider or may operate along with an information divider which is separately installed.

The scaler 210 may include first and second scalers which respectively scale information relating to the OSD menu and information about the manual, which are provided from the OSD information processor 200. Here, the first scaler scales the OSD menu and outputs the OSD menu into a first region of the display 220, and the second scaler scales the help information and outputs the help information into a second region of the display 220. In response to a ratio between areas of the first and second regions of the display unit 220 being 1:1, of the first and second scalers may have the same degree of scaling. In response to the ratio between the areas of the first and second regions being different, the scaling degrees of the first and second scalers may be different from each other. In response to the scaling degrees being different from each other as described above, the first scaler converts 16-bit R, G, and B data input from an external source into 10-bit data, and the second scaler may convert the 16-bit R, G, and B data into 8-bit data. In this process, the scaler 210 may convert and output data to display highlight information when performing scaling according to a user request. For example, in response to a highlight being set to be displayed in a red block shape, as in an exemplary embodiment of the present general inventive concept, a corresponding process may be performed. However, this process may be performed when the OSD information processor 200 processes OSD information, but is not limited thereto. This process may also be performed when the controller operates, wherein the controller will be described below.

The display 220 includes a display panel which displays an image. The display panel may include a liquid crystal panel, a plasma display panel (PDP), an OLED panel, etc. The liquid crystal panel may include first and second substrates and a liquid crystal layer which is interposed between the first and second substrates. A plurality of gate lines GL1 through GLn and a plurality of data lines Dl1 through DLn, which define pixel areas, are formed on the first substrate. The pixel areas cross one another, and pixel electrodes are formed in the pixel areas. A thin film transistor (TFT) is formed in an area of each of the pixel areas, including exactly, at a corner. When the TFTs are turned on, a liquid crystal is twisted according to a difference between a pixel electrode of the first substrate and a common electrode of the second substrate, in order to transmit light which is provided as a backlight.

According to an exemplary embodiment the display 220, the display panel may be divided into first and second regions. Therefore, in response to a user requesting the OSD menu, the OSD menu is displayed on a full screen of the display 220. However, in response to the user requesting help with a particular menu on the OSD menu, the OSD menu may be displayed in the first region, and help information may be displayed in the second region. As described above, the OSD menu and the help information may be displayed in the first and second regions in a manner so as not to overlap with each other, i.e., may be physically divided and displayed. Therefore, the user may not drag the help information displayed in the second region with a mouse. However, the inventive concept is not particularly limited thereto. A ratio between, areas of the first and second regions may be adjusted by a setup or by a command of the user.

Although not shown in FIG. 2, the image display apparatus 100 according to an exemplary embodiment may further include the controller. The controller controls overall operations of the OSD information processor 200, the scaler 210, and the display 220 which constitute the image display apparatus 100. In other words, the controller controls the OSD information processor 200 to realize the algorithm stored therein to generate the OSD menu and the help information and output the OSD menu and the help information to the scaler 210. Also, the controller controls information scaled by the scaler 210, and may exactly provide a path of data relating to information in order to output the information into the first and second regions of the display 220. In addition, the controller controls a timing of data relating to the OSD menu and the help information output into the first and second regions of the display 220.

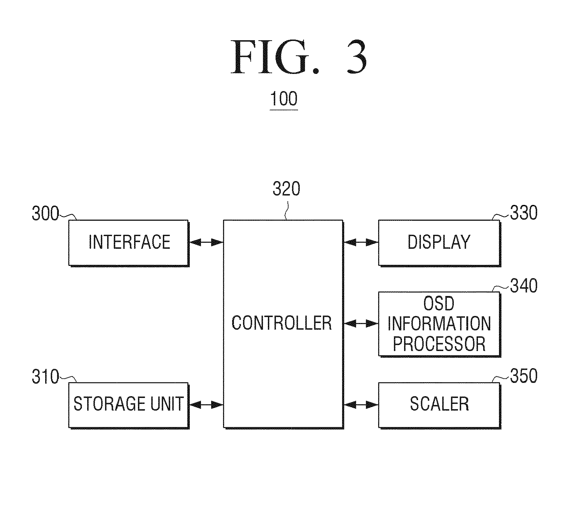

FIG. 3 is a block diagram illustrating a structure of the apparatus 100 for displaying an image according to another exemplary embodiment.

Referring to FIGS. 1 and 3, the image display apparatus 100 includes an interface 300, a storage 310, a controller 320, a display 330, an OSD information processor 340, and a part or a whole of a scaler 350. Here, the inclusion of the part or whole of the scaler 350 indicates that the scaler 350, as an element of the image display 100 may be integrated with the controller 320 or with the display 330. The whole of the scaler 350 will be described herein to provide a sufficient understanding of the inventive concept.

The interface 300 operates as an image board, such as a graphic card, which converts and outputs image data input from an external source so that the image data is appropriate for a resolution of the image display apparatus 100. The image data may include 16-bit R, G, and B image data. The interface 300 generates control signals of a clock signal DCLK and vertical and horizontal sync signals Vsync and Hsync which are appropriate for the resolution of the image display apparatus 100. The interface 300 provides the image data to the controller 320 and provides the vertical and horizontal sync signals to the display 330. When an image is obtained, the vertical and horizontal sync signals synchronize with the image in order to turn on and off backlight.

In response to a scaler converting the resolution of an image, the interface 300 may further include a radio frequency (RF) signal receiver and an RF signal processor which are installed in front of the scaler. The RF signal receiver may include a tuner which is configured to receive a broadcast signal, a DMUX, a demodulator, a synchronizer, an equalizer, etc. The tuner synchronizes the broadcast signal with a particular type signal and outputs the synchronized signal, the DMUX divides a sound and an image from the broadcast signal. The RF signal receiver may receive content according to a user selection. The RF signal processor may be referred to as a decoder. The decoder decodes sound and image packets divided by the DMUX, in particular, the image packet. In other words, since image information is encoded and provided from a broadcasting station, the RF signal receiver performs a process of recovering the image information. Image data recovered as described above may be provided to the scaler which converts the resolution. The scaler is included in the interface 300 to perform a scaling function and may be referred to as a first scaler, which is to be contrasted with the scaler 350 which will be described later, and the scaler 350 of FIG. 3 may be referred to as a second scaler.

The storage unit 310 may be used as a frame memory which i stores R, G, and B image data received from the interface 300 in a frame unit under control of the controller 320 or may operate as a random access memory (RAM) which temporarily stores information provided from particular functional blocks, e.g., the OSD information processor 340 and the scaler 350, under control of the controller 320. Therefore, the storage unit 310 according to this exemplary embodiment may further include the frame memory and the RAM. Moreover, a read only memory (ROM) stores particular information of the image display apparatus 100 for a long time. Data stored in the storage unit 310 is output when requested by controller 320.

The controller 320 controls the overall operations of the interface 300, the storage unit 310, the display 330, the OSD information processor 340, and the scaler 350. For example, the controller 320 may store data input to interface 300 in the storage unit 310, may read the data, and may output the data to the display 330. Alternatively, in response to a user requesting an OSD menu which sets an operation or a function of the image display apparatus 100, the controller 320 may utilize an algorithm (or a program) stored in the OSD information processor 340 in order to generate the OSD menu and to temporarily store the OSD menu in the storage unit 310 or output the OSD menu to the display 330. In response to a user requesting help information of a particular menu on the OSD menu, the controller 320 may determine the request to scale the OSD menu and help information through the scaler 350 and may output the OSD menu and the help information to the display 330.

The controller 320 may also control the timing which is to output image data provided from the interface 300 to the display 330, and output data provided from the OSD information processor 340 and the scaler 350 to the display 330. in response to the display 330 including a gate driver and a source driver, the controller 320 may generate a control signal which controls the gate and source drivers and perform timing control by using the control signal. For example, in response to the controller 320 controlling the gate driver to apply a gate voltage to a first gate line, the controller 320 may control the source driver to apply data which corresponds to a first horizontal line. Here, in response to the applied data being the OSD menu and the help information, data relating to the OSD menu is output into the first region of the display 330, and data relating to the help information is simultaneously output into the second region. When a second gate line is turned on, a first gate line is turned off to apply data which corresponds to a second horizontal line, i.e., the OSD menu and the help information, from the source driver to a display panel of the display 330. According to this method, the controller 320 separately displays the OSD menu and the help information from each other on a full screen of the display panel, so that the OSD menu and the help information do not overlap with each other.

The display 330 may include the gate driver, the source driver, and the display panel. However, the gate and source drivers may be included in the controller 320 or in the display panel, and thus the inventive concept is not limited thereto. Other detailed contents related to the display panel have been sufficiently described in the previous exemplary embodiment, and thus the contents of the previous exemplary embodiment related to the display panel replaces the other detailed contents of the exemplary embodiment related to the display panel.

The OSD information processor 340 and the scaler 350 of FIG. 3 are not greatly different from the OSD information processor 200 and the scaler 210 of FIG. 2, and thus their detailed descriptions will be omitted herein.

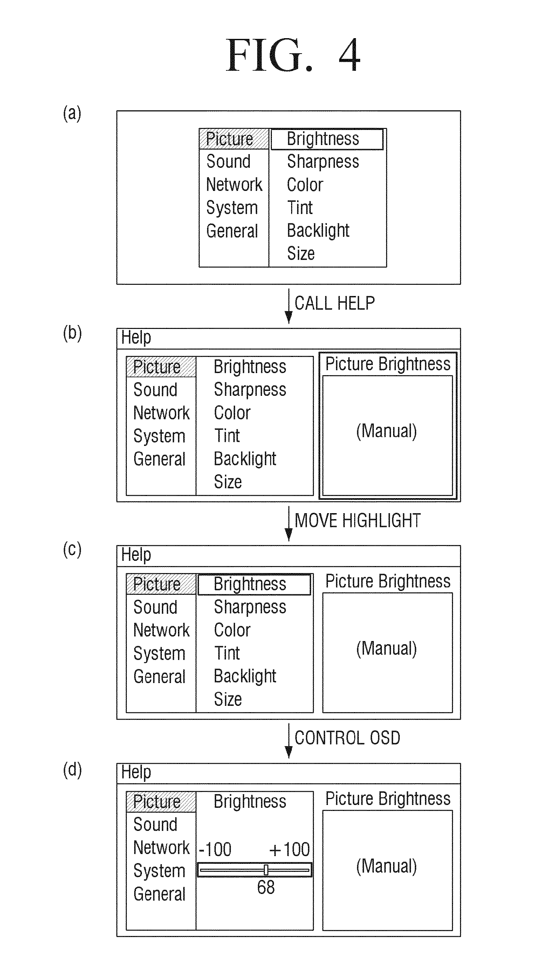

FIGS. 4A through 4D are views illustrating a help information screen which are displayed in response to a user request for help information and an OSD control which is performed when the help information screen is displayed.

FIGS. 4A through 4D illustrate the OSD menu and the help information screen displayed on screens of the display devices 220 and 330 of FIGS. 2 and 3. Referring to FIGS. 1 through 3 and 4A through 4D, in response to a user requesting the OSD menu through the remote control apparatus 110, the image display apparatus 100 displays the OSD menu screen as a full screen.

If the user requests help information with "Brightness" appearing when "Picture" is selected as shown in FIG. 4A, the image display apparatus 100 displays the OSD menu on a left screen and the help information on a right screen as shown in FIG. 4B. Here, the user request for help information may be performed by using an exclusive button of the remote control apparatus 110 which is provided for a user to easily request help information. A display region in which the OSD menu and the help information are displayed may be displayed at a ratio of 1:1 according to a value which has been initially set, but may be adjusted according to a request from the user. In other words, in response to information for adjusting the ratio being received, the image display apparatus 100 may scale and may provide data according to the display ratio which has been set.

When the user performs an OSD control command according to the help information, the user moves a highlight to the OSD menu as shown in FIG. 4C and then selects "Brightness" to control the OSD menu as shown in FIG. 4D. In FIG. 4D, the brightness of a screen is set to 68. In the case of a panel manufactured by a particular manufacturer which complies with a particular standard, information relating to how much screen brightness is appropriate for the help information may be provided as help information to help the user with the setting.

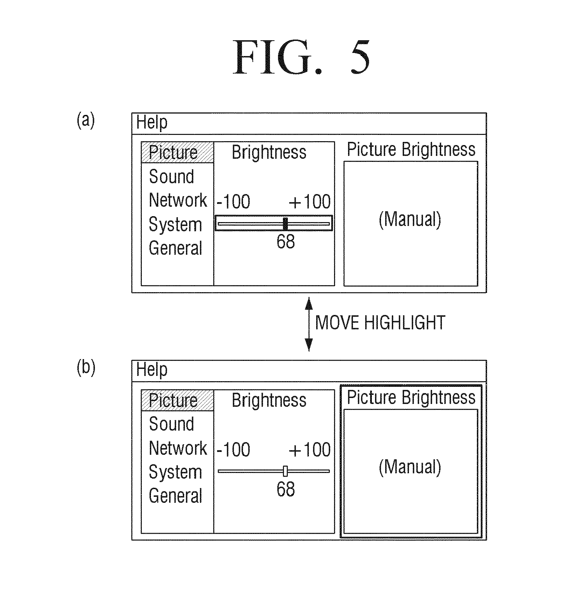

FIGS. 5A and 5B are views illustrating the moving of a highlight between an OSD screen and a help information screen.

Referring to FIGS. 1 through 3 and 5, in response to the image display apparatus 100 dividing a screen to respectively display an OSD menu and help information, a prestored algorithm in the OSD information processor 200 or 340 may have a function of moving a highlight between a brightness setting bar and a help information screen, as shown in FIGS. 5A and 5B.

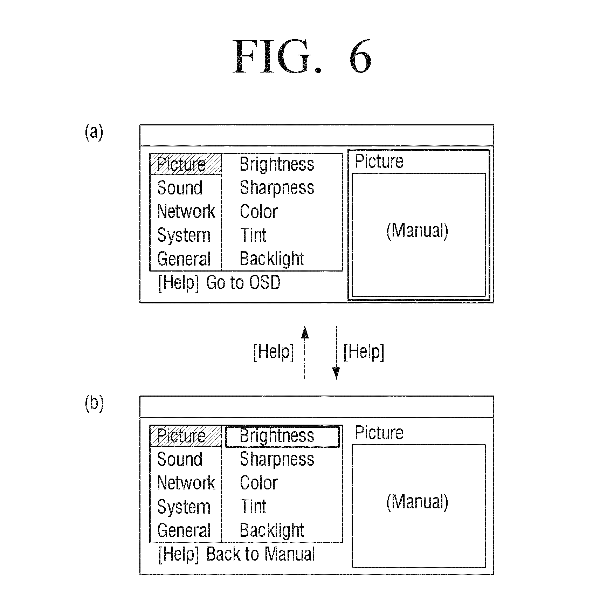

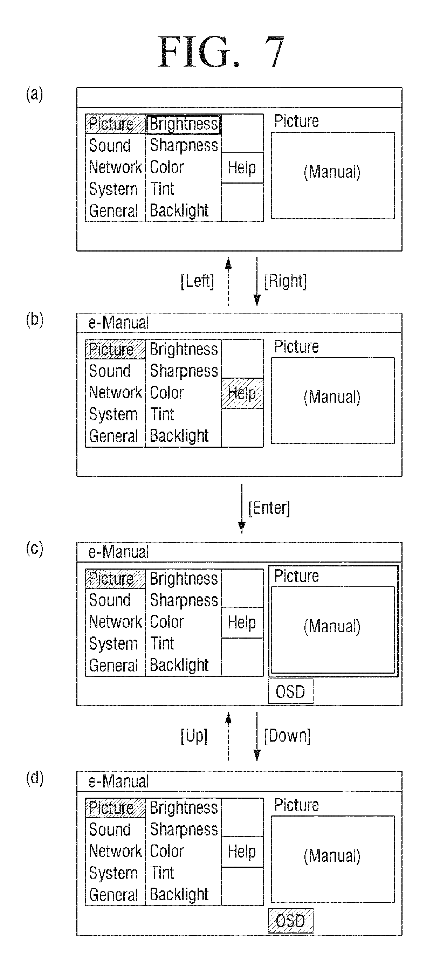

FIGS. 6A and 6B are views illustrating the moving of a highlight by using a particular button. FIGS. 7A and 7B are views illustrating the moving of a highlight by using a direction key and a GUI button.

Referring to FIGS. 1, 6A, and 6B, the algorithm stored in image display apparatus 100 according to an exemplary embodiment, an in particular, in the OSD information processor 200 or 340, may include a function of moving a highlight by using a particular button displayed on a screen. For example, the highlight may be moved between the OSD screen and the help information screen by using a particular button such as "[Help] Go to OSD" and "[Help] Back to Manual" displayed on lower parts of screens of FIGS. 6A and 6B.

Referring to FIGS. 1 and 7A through 7D, the image display apparatus 100 moves a highlight by using a direction key and a GUI button. This is illustrated in FIGS. 7A through 7D. In particular, in response to "Right" key being pressed when "Brightness" is selected as shown in FIG. 7A, a Help menu is highlighted as shown in FIG. 7B. In response to the "Enter" key being pressed, a help information screen is highlighted as shown in FIG. 7C. In response to a "Down" key being pressed as shown in FIG. 7C, an OSD button is highlighted as shown in FIG. 7D. In response to the "Enter" key being pressed again, the highlight returns to the screen of FIG. 7A.

The direction key of FIG. 7 is described as the direction key of the remote control apparatus 110 of FIG. 1. However, a display of the image display apparatus 100 may be a touch screen type, and thus the inventive concept is not limited to a direction key of any apparatus. A GUI button, such as a Help button or an OSD button, corresponds to information generated when an OSD menu is generated.

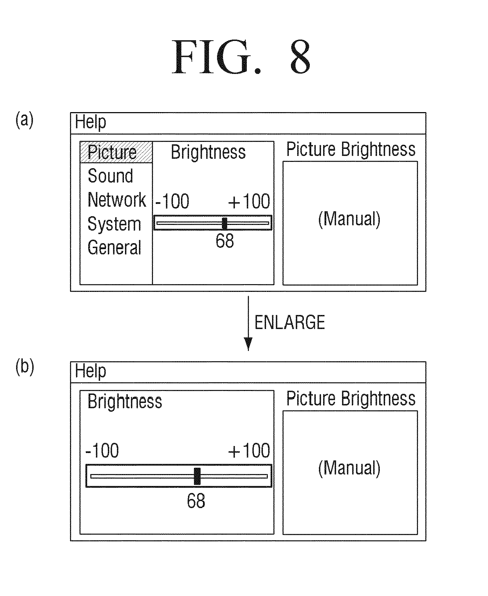

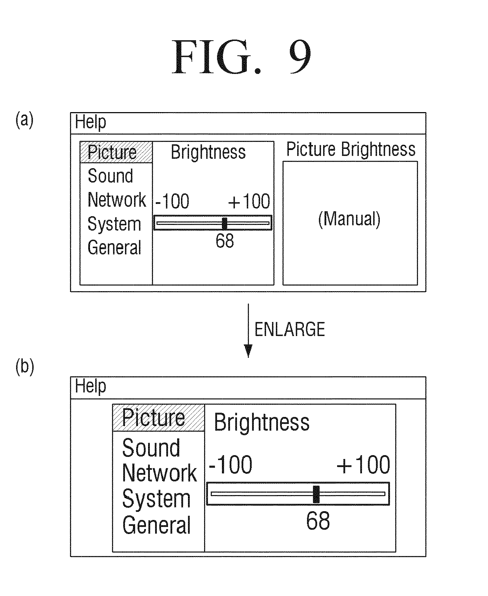

FIGS. 8A and 8B are views illustrating a controllable OSD menu which is enlarged. FIGS. 9A and 9B are views illustrating an initial OSD menu displayed on a full screen. FIGS. 8A and 8B, and 9A and 9B are views illustrating a screen change that can occur when controlling an OSD control.

Referring to FIGS. 1, 8A, and 8B, the image display apparatus 100 enlarges and displays an OSD menu screen. In other words, in response to an OSD menu and help information being respectively displayed in regions, and a user requests an enlargement of the OSD menu, the sizes of the regions in which the OSD menu and the help information are displayed are maintained, and the OSD menu is enlarged as shown in FIG. 8B. In response to a button for an enlargement function the remote control apparatus 100 being selected when the OSD menu the user wants to enlarge is highlighted, the image display apparatus 100 scales data of the corresponding OSD menu, excluding particular information, and outputs the data. This may be performed according to various methods, and thus the inventive concept is not limited to the various methods described herein.

Referring to FIGS. 1, 9A, and 9B, the image display apparatus 100 separately displays an OSD menu screen and a help information screen as shown in FIG. 9A. In response to a user pressing the enlargement function button of the remote control apparatus 110 once, the image display apparatus 100 moves onto a screen as shown in FIG. 8B. In response to a user pressing the enlargement function button of the remote control apparatus 110 once more, the OSD menu returns to its previous size and is displayed on a full screen. This function may be performed by using an enlargement function button but may be performed by selecting "magnifying power" through the use of a button.

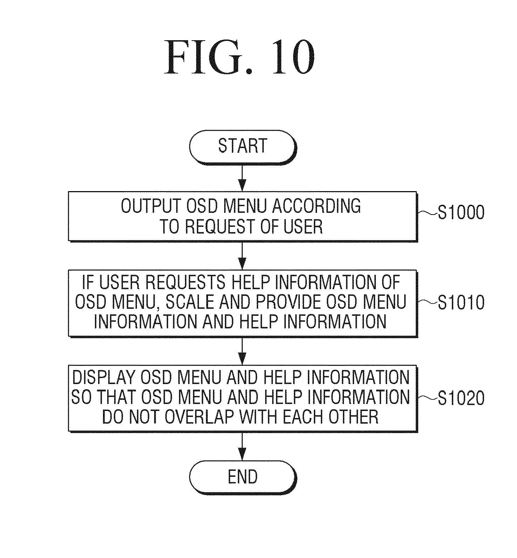

FIG. 10 is a flowchart illustrating an image display apparatus according to an exemplary embodiment of the inventive concept.

For descriptive convenience, FIGS. 1 and 2 will be referred to along with FIG. 10. In operation S1000, the image display apparatus 100 according to an exemplary embodiment outputs OSD menu information according to a user request. In response to a user requesting an OSD menu which is to set an operation or a function of the image display apparatus 100 through the remote control apparatus 110, the image display apparatus 100 recognizes a signal with respect to the OSD menu in order to output the OSD menu information.

In response to a user requesting help with controlling the OSD menu, the image display apparatus 100 scales and provides data relating to the OSD menu and help information in operation S1010. For example, in response to a particular menu being selected from the OSD menu displayed in operation S1000, and an exclusive button of the remote control apparatus 110, e.g., a help button, being subsequently pressed, help information relating to the selected particular menu may be displayed. Contents related to scaling and the display of the OSD menu and the help information, etc. have been described above, and thus their detailed descriptions will be omitted herein.

In operation S1020, the image display apparatus 100 displays data relating to the OSD menu and the help information, and more particularly, displays the OSD menu and the help information on a display panel so that the OSD menu and the help information do not overlap with each other. The displaying of the OSD menu and the help information so that the OSD menu and the help information do not overlap with each other does not indicate that two pieces of data are mixed with each other and then provided to the display panel. Therefore, the OSD menu may be implemented as a first region of the display panel, and the help information may be implemented as a second region of the display panel. As a result, an operation of dragging the help information into a region of the OSD menu may be limited. However, the inventive concept is not limited thereto. Therefore, regions may be separated from each other, but may also overlap with each other, or may be dragged onto each other.

All elements constituting exemplary embodiments of the inventive concept may be combined into one or may be combined to operate but are not limited thereto. In other words, the elements may be selectively combined into one or more elements in order to operate within the scope of the inventive concept. Also, each of the elements may be realized as independent software, but some or all of the elements may be selectively combined to be implemented as a computer program having a program module which performs some or all functions combined in one piece of software or in a plurality of pieces of software. Codes and code segments constituting the computer program may be easily inferred by those of skilled in the art. The computer program may be stored on a non-transitory computer readable medium and may be read and executed by a processor of a computer in order to implement the exemplary embodiments. Examples of a storage medium of the computer program may include a magnetic recording medium, an optical recording medium, etc.

The foregoing exemplary embodiments and advantages are merely exemplary and are not to be construed as limiting. The present teaching can be readily applied to other types of apparatuses. In addition, the description of the exemplary embodiments is intended to be illustrative, and is not meant to limit the scope of the claims, and many alternatives, modifications, and variations will be apparent to those skilled in the art.

## Claims

1. An image display apparatus comprising:
an On Screen Display (OSD) information processor arranged to generate and output menu information including an OSD menu necessary for setting an operation of the image display apparatus and, in response to help information about a selection menu selected from the OSD menu being requested, to generate and output the menu information and the help information;
a scaling unit which, in response to the help information being requested, is arranged to scale the menu information and the help information provided from the OSD information processor and separately provide the scaled menu information and help information; and
a display unit, is arranged to receive the scaled menu information and help information from the scaling unit and is arranged to respectively display the menu information and the help information in first and second regions so that the menu information and the help information do not overlap with each other.

2. The image display apparatus of claim 1, wherein the scaling unit comprises:
a first scaler arranged to scale the menu information and provides the scaled menu information into the first region; and
a second scaler arranged to scale the help information and provides the scaled help information into the second region.

3. The image display apparatus of any one of claims 1 and 2, further comprising:
a controller arranged to control the OSD information processor to highlight the selected selection menu or the help information on the display unit.

4. The image display apparatus of claim 3, wherein the controller is arranged to control the OSD information processor to enlarge and display the selection menu on the display unit.

5. The image display apparatus of claim 3 or 4, wherein the OSD information processor is additionally arranged to generate an auxiliary button for moving the highlight and is arranged to include and output the auxiliary button in the selection menu or a region of the help information.

6. An image display method comprising:
generating and outputting menu information comprising an OSD menu necessary for setting an operation of the image display apparatus and, in response to help information about a selection menu selected from the OSD menu being requested, generating and outputting the menu information and the help information;
in response to the help information being requested, scaling the menu information and the help information and separately providing the scaled menu information and help information; and
receiving the scaled menu information and help information and respectively displaying the menu information and the help information in first and second regions of a display unit so that the menu information and the help information do not overlap with each other.

7. The image display method of claim 6, wherein the separately providing of the scaled menu information and help information comprises:
scaling the menu information and providing the scaled menu information into the first region; and
scaling the help information and providing the scaled help information into the second region.

8. The image display method of any one of claims 6 and 7, further comprising:
controlling an OSD information processor to highlight the selected selection menu or the help information on the display unit.

9. The image display method of claim 8, further comprising:
controlling the OSD information processor to enlarge and display the selection menu on the display unit.

10. The image display method of claim 8 or 9, wherein the generating and outputting of the menu information and the help information comprises:
additionally generating an auxiliary button for moving the highlight, and including and outputting the auxiliary button in the selection menu or a region of the help information.

11. A computer readable recording medium storing a program for executing the image display method of any one of claims 6 to 10.
